# EUROPÄISCHE PATENTSCHRIFT

(11) **EP 2 337 719 B1**
(45) Veröffentlichungstag und Bekanntmachung des Hinweises auf die Patenterteilung: **26.09.2012**
(21) Anmeldenummer: 09736142.2
(22) Anmeldetag: 07.10.2009
(51) Int. Cl.: F16D 65/28, B60T 17/08, B61H 15/00, F16D 65/52, F16D 65/56, F16D 65/66

(54) **PNEUMATISCHER BREMSZYLINDER**
PNEUMATIC BRAKE CYLINDER
CYLINDRE DE FREIN PNEUMATIQUE

(30) Priorität: 15.10.2008 DE 102008051678
(43) Veröffentlichungstag der Anmeldung: 29.06.2011
(73) Patentinhaber: KNORR-BREMSE Systeme für Schienenfahrzeuge GmbH, 80809 München (DE)
(72) Erfinder: ELSTORPFF, Marc-Gregory, 80638 München (DE); HAUPT, Robert, 81379 München (DE); MATHIEU, Michael, 82178 Puchheim (DE)
(74) Vertreter: Mattusch, Gundula
(86) Internationale Anmeldenummer: PCT/EP2009/007185
(87) Internationale Veröffentlichungsnummer: WO 2010/043325

(56) Entgegenhaltungen:
- EP-A1- 0 036 568
- EP-A1- 0 050 573
- EP-A1- 0 121 815
- EP-A1- 0 165 641
- EP-A2- 0 250 927
- EP-A2- 0 250 929
- DE-B1- 2 830 361
- US-A- 3 744 596

## Beschreibung

Die Erfindung betrifft einen pneumatischen Bremszylinder nach dem Oberbegriff von Anspruch 1. Ein derartiger Bremszylinder ist aus der EP0036568 A1 bekannt.

Derartige Bremszylinder werden unter anderem bei Schienenfahrzeugen eingesetzt. Dort werden sie häufig zur Betätigung einer Bremszange verwendet, mit deren Hilfe Bremsbeläge an eine Bremsscheibe angepresst werden. Dabei soll der Kolbenhub, unabhängig vom Verschleiß der Bremsbeläge immer in etwa gleich groß sein. Zu diesem Zweck ist üblicherweise eine Nachstelleinrichtung vorgesehen, die eine in einem Kolbenrohr geführte Spindel und eine Verstellmutter aufweist. Während des normalen Bremsvorgangs wird die Verstellmutter so blockiert, dass nur eine Linearbewegung in Richtung der Längsachse des Bremszylinders, nicht aber eine Drehbewegung zugelassen wird. Erst für den Nachstellvorgang, wenn ein gewisser Verschleiß der Bremsbeläge stattgefunden hat, darf eine Drehung der Verstellmutter zugelassen werden. Zur Kontrolle der Drehbewegung der Verstellmutter wird eine sogenannte Steuerhülse eingesetzt, die innerhalb des Kolbenrohrs auf der Spindel verschiebbar angeordnet ist.

An der der Verstellmutter zugewandten Seite der Steuerhülse ist üblicherweise eine Verzahnung vorgesehen, die in eine entsprechende Verzahnung der Verstellmutter eingreifen kann. Da die Steuerhülse hohe Belastungen aufnehmen muss, ist sie heute aus einem Schwermetall-Kokillenguss gefertigt. Dieses Material gewährleistet zwar eine große und für diesen Einsatz ausreichende Festigkeit, lässt aber nur eine relativ grobe Ausbildung der Verzahnung zu. Dieser Umstand begrenzt die Genauigkeit bei der Nachstellung des Bremszylinders stark.

Der Erfindung liegt die Aufgabe zugrunde, einen pneumatischen Bremszylinder nach dem Oberbegriff von Anspruch 1 so auszugestalten, dass bei einem Verschleiß der Bremsbeläge eine sehr exakte Nachstellung des Bremszylinders erfolgen kann. Trotz der verbesserten Nachstellung sollen die Herstellkosten für den Bremszylinder gesenkt werden.

Gelöst wird die Aufgabe gemäß der Erfindung durch einen pneumatischen Bremszylinder mit den Merkmalen von Anspruch 1. Vorteilhafte Weiterbildungen und Ausgestaltungen ergeben sich aus den Unteransprüchen.

Durch die Verwendung einer Steuerhülse, die als Verbundteil ausgeführt ist, welches einen metallischen Kupplungsring und eine Gleithülse aus Kunststoff aufweist, können die Herstellkosten gegenüber dem bisher üblichen Kokillenguss abgesenkt werden. Der metallische Kupplungsring kann beispielsweise als Stahl-Fließpressteil ausgeführt sein. Dies ermöglicht die kostengünstige Herstellung einer sehr feinen und präzisen Verzahnung. Die Verwendung von Kunststoff für die Gleithülse hat sich ebenfalls als sehr preisgünstig herausgestellt. Bei der Aufnahme des von der Verstellmutter ausgeübten Drehmoments wirkt der Kunststoff der Gleithülse stark dämpfend. Hierdurch wird der Verschleiß der Verzahnung, trotz des höheren Feinheitsgrades, gegenüber der Steuerhülse aus Kokillenguss reduziert. Auch konnte das Gewicht des pneumatischen Bremszylinders durch die Verwendung der neuen Steuerhülse verringert werden.

Besonders vorteilhaft ist der Kupplungsring von der Gleithülse umspritzt oder die Gleithülse in den Kupplungsring eingespritzt. Auf diese Weise kommt eine feste Verbindung zwischen Gleithülse und Kupplungsring zustande, ohne dass ein zusätzlicher Montageschritt vorgenommen werden müsste.

Vorteilhaft ist der Kupplungsring in dem mit der Gleithülse in Verbindung stehenden Bereich mit Durchbrüchen versehen. Während des Abspritzens der Steuerhülse führt dies dazu, dass die Durchbrüche mit Kunststoff ausgefüllt werden. Die Verbindung zwischen Kupplungsring und Gleithülse wird dadurch verfestigt. Insbesondere können hierdurch größere Drehmomente von dem Kupplungsring auf die Gleithülse übertragen werden.

Der Kupplungsring weist eine Verzahnung zum formschlüssigen Eingriff in eine Verzahnung der Verstellmutter auf. Da die Verzahnung des Kupplungsrings sehr fein ausgeführt werden kann, wird eine sehr präzise Nachstellung des Bremszylinders möglich. Durch den Formschluss zwischen Kupplungsring und Verstellmutter lässt sich trotz der feinen Verzahnung ein großes Drehmoment übertragen.

Vorteilhaft ist die Verzahnung an der freien Stirnseite des Kupplungsrings angebracht und als schräge Innenverzahnung ausgeführt. In Verbindung mit einer schrägen Außenverzahnung an einer Stirnseite der Verstellmutter wird so eine große Eingriffsfläche gewährleistet. Auch bewirkt die Schrägstellung der beiden Verzahnungen gleichzeitig eine Zentrierung, so dass die Verzahnung der Steuerhülse und die Verzahnung der Verstellmutter jeweils vollflächig miteinander in Eingriff stehen.

Erfindungsgemäß ist eine Sperreinrichtung vorgesehen, die eine Drehung der Steuerhülse verhindert. Auf diese Weise kann das von der Verstellmutter übertragene Drehmoment sicher aufgenommen werden. Die Sperreinrichtung ist so ausgebildet, dass nur die Drehung der Steuerhülse verhindert wird. Eine Verschiebung der Steuerhülse in Richtung der Längsachse des Bremszylinders wird dagegen in einem vorbestimmten Bereich zugelassen.

Vorteilhaft ist ein Kolbenrohr vorgesehen, welches durch den Kolben betätigt wird. Dieses Kolbenrohr weist schlitzförmige Öffnungen auf, durch die sich die Sperrarme erstrecken. Die schlitzförmigen Öffnungen sind so dimensioniert, dass die Bewegung der Steuerhülse von der Bewegung des Kolbenrohrs entkoppelt werden kann.

Mit ihrem freien Ende greifen die Sperrarme in schlitzförmige Aussparungen ein. Die Breite dieser schlitzförmigen Aussparungen ist an die Breite der Sperrarme angepasst. Auf diese Weise wird eine Drehung der Steuerhülse sicher verhindert.

Die Längsausdehnung der schlitzförmigen Aussparungen ist so dimensioniert, dass die Aussparungen als Anschlag für die Steuerhülse wirken und eine Gleitbewegung der Steuerhülse beschränken. Die zugelassene Gleitstrecke der Steuerhülse entspricht dabei dem Abstand der Bremsbeläge zu der Bremsscheibe plus der elastischen Verformung der die Bremskraft übertragenden Teile zwischen dem Bremszylinder und den Bremsbelägen.

Bei einem Ausführungsbeispiel der Erfindung sind die schlitzförmigen Aussparungen im Gehäuse des Bremszylinders oder einem damit verbundenen Teil vorgesehen. Die Sperrarme sind fest mit der Gleithülse verbunden und vorteilhaft an diese angespritzt. Bei diesem Ausführungsbeispiel bewegen sich die Sperrarme zusammen mit der Gleithülse.

Bei einem anderen Ausführungsbeispiel der Erfindung sind die schlitzförmigen Aussparungen in der Gleithülse selbst vorgesehen. Die Sperrarme sind dagegen als Gleitsteine ausgebildet und fest mit dem Gehäuse des Bremszylinders verbunden, insbesondere mit diesem verschraubt. Bei diesem besonders vorteilhaften Ausführungsbeispiel müssen die Gleitsteine nicht bewegt werden. Hierdurch lässt sich das Gewicht der Steuerhülse weiter reduzieren. Das geringere Gewicht der Steuerhülse macht sich durch eine verringerte Trägheit bei ihrer Bewegung bemerkbar. Hierdurch wird eine noch höhere Präzision bei der Nachstellung des Bremszylinders möglich.

Weitere Einzelheiten und Vorteile der Erfindung ergeben sich aus der Beschreibung eines Ausführungsbeispiels, das anhand der Zeichnung eingehend erläutert wird.

Es zeigt:
- Fig. 1: einen Schnitt durch einen erfindungsgemäßen pneumatischen Bremszylinder,
- Fig. 2 und 3: Detaildarstellungen von dem in Fig. 1 gezeigten Bremszylinder,
- Fig. 4: eine dreidimensionale Darstellung eines bevorzugten Ausführungsbeispiels einer Steuerhülse mit eingesetzten Gleitsteinen,
- Fig. 5: die Steuerhülse aus Fig. 4 in aufgeschnittener Darstellung,
- Fig. 6: einen Schnitt durch den Kupplungsring der Steuerhülse aus Fig. 4 und 5,
- Fig. 7: den Kupplungsring in dreidimensionaler Darstellung,
- Fig. 8: eine dreidimensionale Darstellung des bevorzugten Ausführungsbeispiels der Steuerhülse ohne Sperrarme,
- Fig. 9: den Kupplungsring der Steuerhülse aus Fig. 8 ohne Gleithülse,
- Fig. 10: ein zweites Ausführungsbeispiel einer Steuerhülse in dreidimensionaler Darstellung mit angeformten Sperrarmen und
- Fig. 11: den Kupplungsring der Steuerhülse aus Fig. 10 ohne Gleithülse

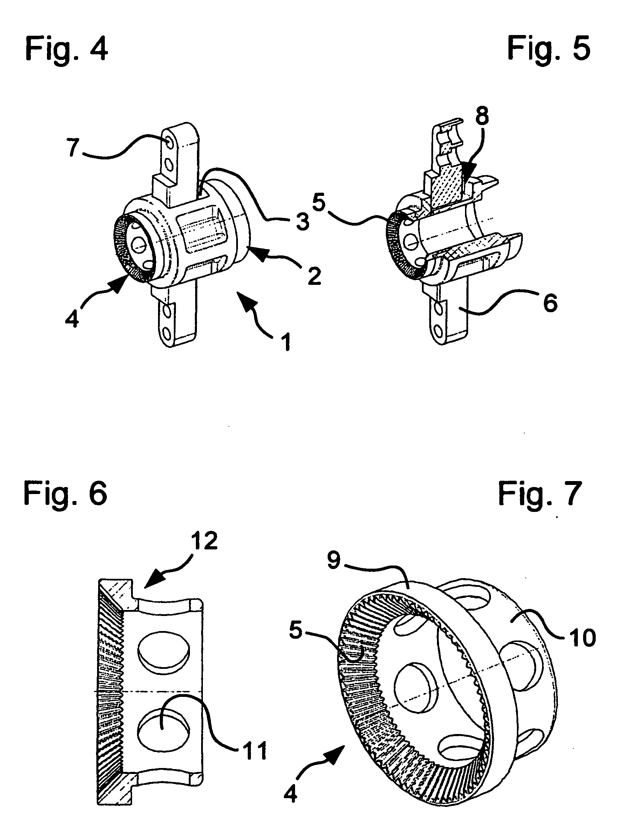

Die Ausgestaltung der neuen Steuerhülse ist den Fig. 4 - 11 zu entnehmen, wobei in den Fig. 4 - 9 ein bevorzugtes Ausführungsbeispiel dargestellt ist. Die Steuerhülse 1 ist als Verbundteil aufgebaut, wobei ein Kupplungsring 4 mit einer Gleithülse 2 verbunden wurde. Der Kupplungsring 4 ist als Stahl-Fließpressteil ausgeführt und besteht aus einem Zahnring 9 und einem Verbindungsring 10. Verbindungsring 10 und Zahnring 9 besitzen den gleichen Innendurchmesser, wohingegen der Außendurchmesser des Zahnrings 9 größer als der Außendurchmesser des Verbindungsrings 10 dimensioniert ist. In der Außenkontur des Kupplungsrings 4 entsteht dadurch die Stufe 12. Die freie Stirnseite des Zahnrings 9 ist mit einer schrägen Innenverzahnung 5 versehen. Der Verbindungsring 10 weist eine Anzahl runder Durchbrüche 11 auf.

In die Gleithülse 2 sind zwei gegenüberliegende Gleitkanäle 3 eingearbeitet. In diese Gleitkanäle 3 greifen die Gleitsteine 6 ein. Die Breite der Gleitsteine 6 ist exakt an die Breite der Gleitkanäle 3 angepasst, so dass bei einer Fixierung der Gleitsteine 6 keine Drehbewegung der Gleithülse 2 möglich ist. Um die Gleitsteine 6 fixieren zu können, sind die Befestigungsbohrungen 7 vorgesehen, die insbesondere zur Aufnahme von Schrauben dienen. Die Längsausdehnung der Gleitkanäle 3 ist so bemessen, dass beim Eingreifen der Gleitsteine 6 der Anlegespalt 8 verbleibt. Die Bedeutung des Anlegespalts 8 wird weiter unten bei der Funktionsbeschreibung des Bremszylinders näher erläutert.

Bei der Herstellung der Steuerhülse 1 wird der Kupplungsring in das Spritzwerkzeug eingelegt. Während des Abspritzens der Steuerhülse 1 füllt der Kunststoff auch die Stufe 12 des Kupplungsrings 4 und tritt in die Durchbrüche 11 des Verbindungsrings 10 ein. Hierdurch ist eine ausgezeichnete Verbindung zwischen dem Kupplungsring 4 und der Gleithülse 2 gewährleistet. Durch den Kunststoff in den Durchbrüchen 11 wird verhindert, dass sich die Bauteile gegeneinander verdrehen können.

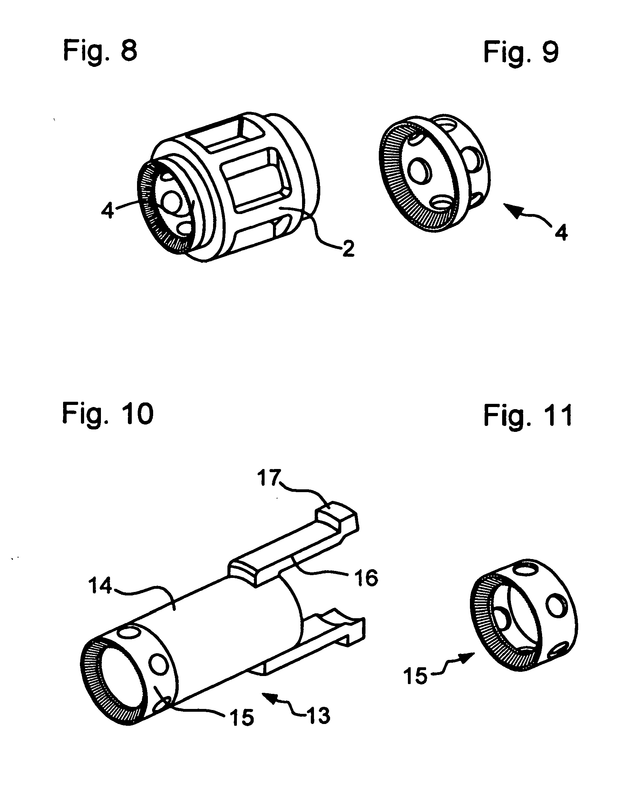

In den Fig. 10 und 11 ist ein weiteres Ausführungsbeispiel einer Steuerhülse gezeigt. Der hier verwendete Kupplungsring 15 besitzt einen stufenlosen Außenumfang. Die Stufe zur Aufnahme der Gleithülse 14 befindet sich hier auf der Innenseite des Kupplungsrings 15. Während bei dem ersten Ausführungsbeispiel nach den Fig. 4-9 der Kupplungsring 4 in der Gleithülse 2 steckt, steckt bei diesem Ausführungsbeispiel die Gleithülse 14 in dem Kupplungsring 15. Auch hier sind Durchbrüche vorgesehen, die - mit dem Kunststoff der Gleithülse 14 gefüllt - eine Verdrehsicherung zwischen Gleithülse 14 und Kupplungsring 15 bewirken.

Bei dem Ausführungsbeispiel nach den Fig. 10 und 11 sind Sperrarme 16 direkt an die Gleithülse 14 angespritzt. Die Sperrarme 16 weisen Gleitkufen 17 auf, mit denen die Sperrarme in einen mit dem Bremszylinder verschraubten Anschlagring eingreifen. Auch hier sind Ausnehmungen entsprechend den Gleitkanälen 3 des ersten Ausführungsbeispiels vorgesehen, so dass eine gewisse Längsverschiebung der Gleitkufen 17 möglich ist. Das Ausmaß der Verschiebung entspricht dem Anlegespalt 8 in dem ersten Ausführungsbeispiel.

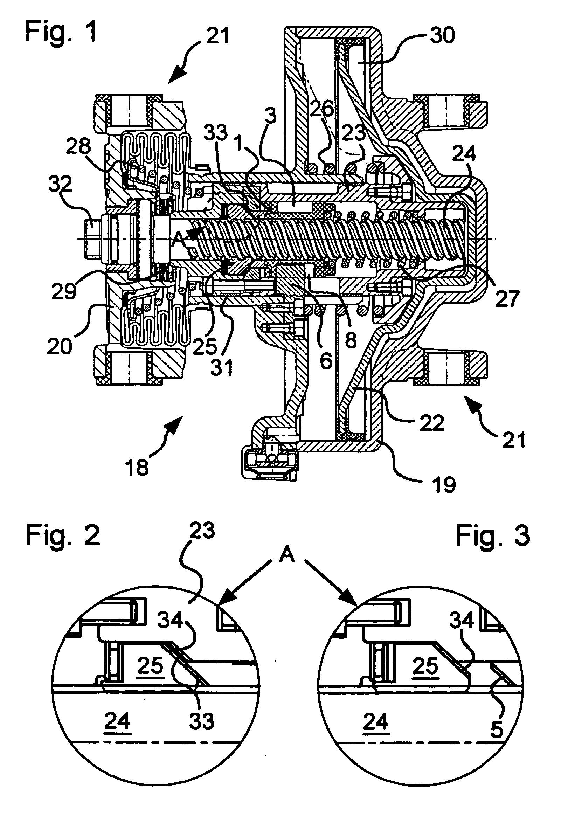

Der Einsatz der neuen Steuerhülse wird an dem in Fig. 1 dargestellten pneumatischen Bremszylinder erläutert. Die Befestigungen 21 für eine Bremszange befinden sich zum einen an dem Joch 20 und zum anderen an dem Gehäuse 19. Zum Betätigen der Bremse muss die hier nicht dargestellte Bremszange auseinander gedrückt werden. Das bedeutet, dass der Abstand zwischen dem Joch 20 und dem Gehäuse 19 vergrößert werden muss.

In dem Gehäuse 19 ist der Kolben 22 vorgesehen. Zwischen dem Kolben 22 und dem Gehäuse 19 befindet sich der Druckraum 30. Der Druckluftanschluss, über den Druckluft dem Druckraum 30 zugeführt wird, ist in dieser Darstellung nicht sichtbar. Von dem Kolben 22 wird das Kolbenrohr 23 betätigt. Der Kolben 22 ist jedoch nicht fest mit dem Kolbenrohr 23 verbunden sondern lose in den Bremszylinder eingelegt. Die Betätigung des Kolbenrohrs 23 erfolgt lediglich über eine ringförmige Anlagefläche, mit der der Kolben 22 auf das Kolbenrohr 23 drückt.

In dem Kolbenrohr 23 sind Langlöcher vorgesehen, durch die sich Gleitsteine 6 erstrecken, die mit dem Gehäuses 19 verschraubt sind. Durch diese Maßnahme wird eine Verdrehung des Kolbenrohrs 23 gegenüber dem Gehäuse 19 verhindert, eine Längsverschiebung des Kolbenrohrs 23 dagegen zugelassen. Bei der Längsverschiebung wird das Kolbenrohr 23 durch die ringförmigen Gleitbänder 31 an der Innenwand des Gehäuses 19 abgestützt. Der Kolben 22 und das Kolbenrohr 23 werden durch die Kolbenrückdruckfeder 26, die sich an dem Gehäuse 19 und dem Kolbenrohr 23 abstützt, in ihrer Ruhelage gehalten.

In dem Kolbenrohr 23 befindet sich die Spindel 24. Durch die Verstellmutter 25 wird die Spindel 24 in ihrer Position kontrolliert. Verstellmutter 25 und Spindel 24 stehen über ein nicht selbsthemmendes Gewinde miteinander in Verbindung, so dass eine Kraft in Richtung der Längsachse der Spindel 24 ein Drehmoment auf die Verstellmutter 25 ausübt. Diese Kraft wird auf die Spindel 24 von der Kegelfeder 28 ausgeübt, die sich an dem Joch 20 und dem Kolbenrohr 23 abstützt. Die Kegelfeder 28 übt somit eine Kraft aus, die versucht die Spindel 24 aus dem Kolbenrohr 23 herauszuziehen.

Die Verstellmutter 25 weist an ihrer schrägen Stirnseite eine Außenverzahnung 34 (siehe insbesondere Fig. 2 und 3, die das in Fig. 1 mit A bezeichnete Teil vergrößert und in verschiedenen Arbeitszuständen darstellen). Normalerweise ist die Innenverzahnung 5 der Steuerhülse 1 mit der Außenverzahnung 34 der Verstellmutter 25 in Eingriff. Die Steuerhülse 1 ist über die Gleitsteine 6, die mit dem Gehäuse 19 verschraubt sind, an einer Verdrehung gehindert. Durch den Eingriff der Innenverzahnung 5 der Steuerhülse 1 mit der Außenverzahnung 34 der Verstellmutter 25 wird diese ebenfalls an einer Verdrehung gehindert. Die Steuerhülse 1 wird über die Verriegelungsfeder 27 vorgespannt, die sich an der Steuerhülse 1 und an dem Kolbenrohr 23 abstützt. Mit Hilfe der Tellerfeder 29 wird ein mit der Spindel 24 verbundener Zahnkranz in eine Verzahnung des Jochs 20 gedrückt, so dass eine Drehung der Spindel 24 gegenüber dem Joch 20 verhindert wird.

Im Folgenden soll die Funktion des Bremszylinders 18 beschrieben werden:
Durch eine Erhöhung des pneumatischen Drucks im Druckraum 30 wird der Kolben 22 nach links gedrückt. Dabei betätigt er das Kolbenrohr 23 und drückt dieses ebenfalls entgegen der Kraft der Kolbenrückdruckfeder 26 nach links. Die durch die Verriegelungsfeder 27 vorgespannte Steuerhülse 1 wird mit ihrer Innenverzahnung 5 auf die Außenverzahnung 34 der Verstellmutter 25 gedrückt und bewegt sich zusammen mit Kolbenrohr 23, Spindel 24, Verstellmutter 25 und Joch 20 ebenfalls nach links. Die Kolbenrohr verzahnung 33 ist dagegen nicht in Eingriff mit der Außenverzahnung der Verstellmutter 25. Dieser Zustand ist in Fig. 2 dargestellt.

In dem Moment, in dem sich die Steuerhülse 1 soweit nach links verschoben hat, dass sich der Anlegespalt 8 zwischen den Gleitsteinen 6 und der Begrenzung der Gleitkanäle 3 schließt, kommen die hier nicht gezeigten Bremsbeläge an der Bremsscheibe zur Anlage. Ab diesem Zeitpunkt wird über das Joch 20 ein Gegendruck aufgebaut. Da sich der Anlegespalt 8 jetzt geschlossen hat, kann die Steuerhülse 1 an einer weiteren Bewegung des Kolbenrohrs 23 nicht mehr teilnehmen.

Das Kolbenrohr 23 wird nun um einen geringen Betrag weiter nach links, entgegen der Kraft der Kegelfeder 28, verschoben, während Joch 20, Spindel 24 und Verstellmutter 25 an gleicher Stelle verharren. Durch diese Verschiebung des Kolbenrohrs 23 gegenüber der Verstellmutter 25 kommt die Außenverzahnung 34 der Verstellmutter 25 außer Eingriff mit der Innenverzahnung 5 der Steuerhülse 1. Gleichzeitig kommt die Außenverzahnung 34 jedoch in Eingriff mit der Kolbenrohrverzahnung 33.

Bei weiterem Druckaufbau im Druckraum 30 werden die Bremsbeläge gegen die Bremsscheibe gepresst, wobei das Kolbenrohr 23 mit großer Kraft gegen die Verstellmutter 25 gedrückt wird. Durch diese gegeneinander gerichteten Kräfte von Kolben 22 und Kolbenrohr 23 auf der einen Seite sowie Joch 20, Spindel 24 und Verstellmutter 25 auf der anderen Seite, wird ein Drehmoment auf die Verstellmutter 25 ausgeübt. Dieses Drehmoment wird durch die Kolbenrohrverzahnung 33 aufgenommen und auf das Kolbenrohr 23 übertragen. Über die Gleitsteine 6 geht das Drehmoment auf das Gehäuse 19 über. Das Gehäuse 19 ist über die Befestigungen 21 so mit der Bremszange verbunden, dass das Drehmoment hier endgültig aufgefangen wird. Dieser Zustand von Kolbenrohr 23, Verstellmutter 25 und Steuerhülse 1 ist in Fig. 3 dargestellt.

Beim Lösen der Bremse löst sich auch die Kolbenrohrverzahnung 33 wieder von der Außenverzahnung 34 der Verstellmutter 25. Gleichzeitig kommt die Außenverzahnung 34 der Verstellmutter 25 wieder in Eingriff mit der Innenverzahnung 5 der Steuerhülse 1.

Während also bei einem normalen Bremsvorgang keine Drehung der Verstellmutter 25 zugelassen wird, muss sich die Verstellmutter 25 drehen können, wenn eine Nachstellung aufgrund einer Abnutzung der Bremsbeläge notwendig wird. Hat ein gewisser Verschleiß der Bremsbeläge stattgefunden, hat sich auch der Spalt zwischen Bremsbelägen und Bremsscheibe vergrößert. Es ist folglich ein größerer Kolbenhub notwendig, um die Bremsbeläge in Anlage an die Bremsscheibe zu bringen.

Die Einleitung des Bremsvorgangs erfolgt wie bei einer normalen Bremsung. Kolben 22, Kolbenrohr 23 und Steuerhülse 1 bewegen sich zusammen nach links. Die Steuerhülse 1 nimmt an dieser Bewegung teil bis der Anlegespalt 8 geschlossen ist. Nun wird die Innenverzahnung 5 der Steuerhülse 1 von der Außenverzahnung 34 der Verstellmutter 25 entkoppelt. Gegenüber einem normalen Bremsvorgang wird nun jedoch kein Gegendruck aufgebaut, da sich die Bremsbeläge noch nicht in Anlage an der Bremsscheibe befinden. Folglich koppelt die Kolbenrohrverzahnung 33 noch nicht in die Außenverzahnung 34 der Verstellmutter 25 ein. Über die Kegelfeder 28 wird auf Joch 20 und Spindel 24 eine Kraft ausgeübt, die versucht, die Spindel 24 nach links aus dem Kolbenrohr 23 herauszuziehen. Dabei wirkt auf die Verstellmutter 25 ein Drehmoment ein. Da die Außenverzahnung 34 der Verstellmutter 25 in diesem Zustand weder mit der Innenverzahnung 5 der Steuerhülse 1 noch mit der Kolbenrohrverzahnung 33 gekoppelt ist, kann die Verstellmutter 25 dem Drehmoment nachgeben und rotiert auf der Spindel 24. Durch diese Drehung der Verstellmutter 25 kann die Spindel 24 relativ zu der Verstellmutter 25 nach links herausgezogen werden.

Die Drehung der Verstellmutter 25 hält so lange an, bis die Bremsbeläge in Anlage an die Bremsscheibe gekommen sind. In diesem Moment wird wiederum ein Gegendruck aufgebaut, der eine Kopplung der Kolbenrohrverzahnung 33 mit der Außenverzahnung 34 der Verstellmutter 25 bewirkt. Der Nachstellvorgang ist damit abgeschlossen und weitere Bremsvorgänge finden solange wieder ohne Nachstellung statt, bis erneut ein bestimmter Verschleiß der Bremsbeläge aufgetreten ist.

Ist eine Nachstellung nicht mehr möglich, müssen die Bremsbeläge gewechselt werden. Dabei muss auch der Bremszylinder 18 wieder in seinen ursprünglichen Zustand zurückversetzt werden. Hierzu wird an dem Rückstellsechskant 32 angesetzt und die Spindel 24 wieder vollständig in das Kolbenrohr 23 hinein gedreht. Bei dem ersten Bremsvorgang, nach der Montage der neuen Bremsbeläge, findet wiederum eine Nachstellung statt, so dass sich auch hier der vorbestimmte Abstand zwischen Bremsbelägen und Bremsscheibe automatisch richtig einstellt.

### Bezugszeichenliste:

- 1: Steuerhülse
- 2: Gleithülse
- 3: Gleitkanal
- 4: Kupplungsring
- 5: Innenverzahnung
- 6: Gleitstein
- 7: Befestigungsbohrung
- 8: Anlegespalt
- 9: Zahnring
- 10: Verbindungsring
- 11: Durchbruch
- 12: Stufe
- 13: weiteres Ausführungsbeispiel einer Steuerhülse
- 14: Gleithülse
- 15: Kupplungsring
- 16: Sperrarm
- 17: Gleitkufe
- 18: Bremszylinder
- 19: Gehäuse
- 20: Joch
- 21: Befestigung für Bremszange
- 22: Kolben
- 23: Kolbenrohr
- 24: Spindel
- 25: Verstellmutter
- 26: Kolbenrückdruckfeder
- 27: Verriegelungsfeder
- 28: Kegelfeder
- 29: Tellerfeder
- 30: Druckraum
- 31: Gleitband
- 32: Rückstellsechskant
- 33: Kolbenrohrverzahnung
- 34: Außenverzahnung der Verstellmutter

## Patentansprüche

1. Pneumatischer Bremszylinder mit einem Kolben (22) zur Übertragung des pneumatischen Drucks auf eine Bremse, mit einer Einrichtung zum automatischen Nachstellen bei einem Verschleiß von Bremsbelägen, die eine Spindel (24), eine Verstellmutter (25) und eine mit der Verstellmutter (25) in Eingriff bringbare Steuerhülse (1; 13) aufweist, **dadurch gekennzeichnet, dass** die Steuerhülse (1; 13) als Verbundteil ausgeführt ist, welches einen metallischen Kupplungsring (4; 15) und eine Gleithülse (2; 14) aus Kunststoff aufweist.

2. Pneumatischer Bremszylinder nach Anspruch 1, **dadurch gekennzeichnet, dass** der Kupplungsring (4) von der Gleithülse (2) umspritzt oder die Gleithülse (14) in den Kupplungsring (15) eingespritzt ist.

3. Pneumatischer Bremszylinder nach Anspruch 2, **dadurch gekennzeichnet, dass** der Kupplungsring (4; 15) in dem mit der Gleithülse (2; 14) in Verbindung stehenden Bereich mit Durchbrüchen (11) versehen ist.

4. Pneumatischer Bremszylinder nach Anspruch 1, **dadurch gekennzeichnet, dass** der Kupplungsring (4; 15) eine Verzahnung (5) zum formschlüssigen Eingriff in eine Verzahnung (34) der Verstellmutter (25) aufweist.

5. Pneumatischer Bremszylinder nach Anspruch 4, **dadurch gekennzeichnet, dass** die Verzahnung an der freien Stirnseite des Kupplungsrings (4; 15) angebracht ist und als schräge Innenverzahnung (5) ausgeführt ist.

6. Pneumatischer Bremszylinder nach Anspruch 1, **dadurch gekennzeichnet, dass** die Verstellmutter (25) an einer Stirnseite eine schräge Außenverzahnung (34) aufweist.

7. Pneumatischer Bremszylinder nach Anspruch 1, **dadurch gekennzeichnet, dass** eine Sperreinrichtung (3, 6; 16, 17) vorgesehen ist, die eine Drehung der Steuerhülse (1; 13) verhindert.

8. Pneumatischer Bremszylinder nach Anspruch 7, **dadurch gekennzeichnet, dass** die Sperreinrichtung Sperrarme (6; 16) aufweist, die sich durch schlitzförmige Öffnungen eines Kolbenrohrs (23) erstrecken.

9. Pneumatischer Bremszylinder nach Anspruch 8, **dadurch gekennzeichnet, dass** die Sperrarme (6; 16, 17) mit einem freien Ende in schlitzförmige Aussparungen eingreifen.

10. Pneumatischer Bremszylinder nach Anspruch 9, **dadurch gekennzeichnet, dass** die schlitzförmigen Aussparungen so dimensioniert sind, dass sie als Anschlag für die Steuerhülse (1; 13) wirken und eine Gleitbewegung der Steuerhülse (1; 13) beschränken.

11. Pneumatischer Bremszylinder nach Anspruch 10, **dadurch gekennzeichnet, dass** die schlitzförmigen Aussparungen im Gehäuse (19) des Bremszylinders (18) oder einem damit verbundenen Teil vorgesehen sind und die Sperrarme (16, 17) an die Gleithülse (13) angespritzt sind.

12. Pneumatischer Bremszylinder nach Anspruch 10, **dadurch gekennzeichnet, dass** die schlitzförmigen Aussparungen als Gleitkanal (3) in der Gleithülse (2) vorgesehen sind und die Sperrarme als Gleitsteine (6) mit dem Gehäuse (19) des Bremszylinders (18) verschraubt sind.

## Claims

1. A pneumatic brake cylinder having a piston (22) for transmitting the pneumatic pressure to a brake, having a device for automatic adjustment in the case of wear of brake linings, which device has a spindle (24), an adjusting nut (25) and a control sleeve (1; 13) which can be brought into engagement with the adjusting nut (25), **characterized in that** the control sleeve (1; 13) is configured as a composite part which has a metallic coupling ring (4; 15) and a sliding sleeve (2; 14) made from plastic.

2. The pneumatic brake cylinder as claimed in claim 1, **characterized in that** the coupling ring (4) is encapsulated using injection molding by the sliding sleeve (2) or the sliding sleeve (14) is injection molded into the coupling ring (15).

3. The pneumatic brake cylinder as claimed in claim 2, **characterized in that** the coupling ring (4; 15) is provided with apertures (11) in the region which is connected to the sliding sleeve (2; 14).

4. The pneumatic brake cylinder as claimed in claim 1, **characterized in that** the coupling ring (4; 15) has a toothing system (5) for the positively locking engagement into a toothing system (34) of the adjusting nut (25).

5. The pneumatic brake cylinder as claimed in claim 4, **characterized in that** the toothing system is attached on the free end side of the coupling ring (4; 15) and is configured as an oblique internal toothing system (5).

6. The pneumatic brake cylinder as claimed in claim 1, **characterized in that** the adjusting nut (25) has an oblique external toothing system (34) on one end side.

7. The pneumatic brake cylinder as claimed in claim 1, **characterized in that** a locking device (3, 6; 16, 17) is provided which prevents rotation of the control sleeve (1; 13).

8. The pneumatic brake cylinder as claimed in claim 7, **characterized in that** the locking device has locking arms (6; 16) which extend through slot-shaped openings of a piston tube (23).

9. The pneumatic brake cylinder as claimed in claim 8, **characterized in that** the locking arms (6; 16, 17) engage with a free end into slot-shaped cutouts.

10. The pneumatic brake cylinder as claimed in claim 9, **characterized in that** the slot-shaped cutouts are dimensioned in such a way that they act as a stop for the control sleeve (1; 13) and restrict a sliding movement of the control sleeve (1; 13).

11. The pneumatic brake cylinder as claimed in claim 10, **characterized in that** the slot-shaped cutouts are provided in the housing (19) of the brake cylinder (18) or a part which is connected to the latter, and the locking arms (16, 17) are injection molded onto the sliding sleeve (13).

12. The pneumatic brake cylinder as claimed in claim 10, **characterized in that** the slot-shaped cutouts are provided as a sliding channel (3) in the sliding sleeve (2) and the locking arms are screwed as sliding blocks (6) to the housing (19) of the brake cylinder (18).

## Revendications

1. Cylindre de frein pneumatique ayant un piston (22) de transmission de la pression pneumatique à un frein, comprenant un dispositif de rattrapage automatique lors d'une usure de garnitures de frein, qui a une broche (24), un écrou (25) de réglage et une douille (1, 13) de commande pouvant être mise en prise avec l'écrou (25) de réglage, **caractérisé en ce que** la douille (1, 13) de commande est réalisée sous la forme d'une pièce composite qui a un anneau (4, 15) métallique d'accouplement et une douille (2, 14) de glissement en matière plastique.

2. Cylindre de frein pneumatique suivant la revendication 1, **caractérisé en ce que** l'anneau (4) d'accouplement est recouvert par extrusion de la douille (2) de glissement ou la douille (14) de glissement est injectée dans l'anneau (15) d'accouplement.

3. Cylindre de frein pneumatique suivant la revendication 2, **caractérisé en ce que** l'anneau (4, 15) d'accouplement est pourvu de traversées (11) dans la zone en liaison avec la douille (2, 14) de glissement.

4. Cylindre de frein pneumatique suivant la revendication 1, **caractérisé en ce que** l'anneau (4, 15) d'accouplement a une denture (5) pour l'engrenage à complémentarité de forme dans une denture (34) de l'écrou (25) de réglage.

5. Cylindre de frein pneumatique suivant la revendication 4, **caractérisé en ce que** la denture est mise sur le côté frontal libre de l'anneau (4, 15) d'accouplement et est réalisée en denture (5) intérieure inclinée.

6. Cylindre de frein pneumatique suivant la revendication 1, **caractérisé en ce que** l'écrou (25) de réglage a sur un côté frontal une denture (34) extérieure inclinée.

7. Cylindre de frein pneumatique suivant la revendication 1, **caractérisé en ce qu'**il est prévu un dispositif (3, 6, 16, 17) de blocage, qui empêche une rotation de la douille (1, 13) de commande.

8. Cylindre de frein pneumatique suivant la revendication 7, **caractérisé en ce que** le dispositif de blocage à des bras (6, 16) de blocage, qui s'étendent dans des ouvertures en forme de fente d'un tube (23) de piston.

9. Cylindre de frein pneumatique suivant la revendication 8, **caractérisé en ce que** les bras (6, 16, 17) de blocage pénètrent par une extrémité libre dans des évidements en forme de fente.

10. Cylindre de frein pneumatique suivant la revendication 9, **caractérisé en ce que** les évidements en forme de fente ont des dimensions telles qu'ils agissent comme butée pour la douille (1, 13) de commande et limitent un mouvement de glissement de la douille (1, 13) de commande.

11. Cylindre de frein pneumatique suivant la revendication 10, **caractérisé en ce que** les évidements en forme de fente sont prévus dans le corps (19) du cylindre (18) de frein ou dans une partie qui y est reliée et les bras (16, 17) de blocage sont injectés sur la douille (13) de glissement.

12. Cylindre de frein pneumatique suivant la revendication 10, **caractérisé en ce que** les évidements en forme de fente sont prévus en tant que canal (3) de glissement dans la douille (2) de glissement et les bras de blocage sont en tant que patins (6) vissés avec le corps (19) du cylindre (18) de frein.
